# EUROPEAN PATENT SPECIFICATION

(11) **EP 3 205 467 B1**
(45) Date of publication and mention of the grant of the patent: **24.07.2019**
(21) Application number: 17397506.1
(22) Date of filing: 07.02.2017
(51) Int. Cl.: B27L 7/00, B27L 7/06, B27B 31/00

(54) **A FIREWOOD PROCESSOR WITH AN END STOPPER**
BRENNHOLZVERARBEITER MIT EINEM ENDANSCHLAG
PROCESSEUR DE BOIS AVEC UN EMBOUT D'ARRÊT

(30) Priority: 10.02.2016 FI 20165094
(43) Date of publication of application: 16.08.2017
(73) Proprietor: Ylistaron Terästakomo Oy, 61400 Ylistaro (FI)
(72) Inventor: NIKUNEN, Lassi, 33720 Tampere (FI); KUISMANEN, Esa-Pekka, 61400 Ylistaro (FI)
(74) Representative: Berggren Oy, Tampere

(56) References cited:
- WO-A1-2005/065904
- WO-A1-2010/122225
- WO-A1-2011/141636
- FI-B- 121 778
- FR-A1- 2 948 054
- IT-A1- UD20 130 121
- US-A- 4 173 237
- US-A- 4 284 112
- US-A- 4 371 019
- US-A- 4 685 495

## Description

### Technical field

The invention relates to firewood processors according to the preamble of claim 1. Such a wood processor is disclosed by US 4, 685, 495.

### Background

Firewood is used in fire places for heating. Firewood can be made from wood, such as logs, e.g. by using firewood processors. Firewood processors both cut (i.e. saw) and split wood to obtain firewood. A firewood processor is known e.g. from US 4,173,237. In addition, US 4,685,495 discloses a machine for processing fallen trees into split logs, i.e. a firewood processor.

One problem in such a known firewood processors is related to controlling the length of the cut log. Typically, some means, such as a conveyor, is configured to move the wood a proper distance in order to move to wood to such a place that a log having a desired length can be sawn therefrom. However, stumps of branches or other irregularities may hinder the movement of the wood. Thus, typically the movements of the wood to the saw is done by engaging e.g. a conveyor manually. Need for manual control slows down the process. Moreover, manual control often imposes some irregularities into the log length. However, the fireplaces are commonly configured such that optimal air circulation and burning therein is obtained only when the length of the firewood equals the designed firewood length.

Another problem of known firewood processors is that when wood is cut into logs having different lengths, the distance between the pressure plate and a splitting wedge must be adjustable according to the longest possible length of the logs. Provided that this distance is set to equal or exceed the length of the longest log(s), the pressure plate and/or the splitting wedge must undergo unnecessary, empty, movements, which also slows down the process.

A further problem of known firewood processors is that when the cut wood is split, for certain thicknesses the log is split is such a way that a significant amount of wood chips (i.e. reject or waste) is obtained. Such firewood, however does not fulfil quality standards, and must, therefore be rejected. This decreases the yield of high-quality firewood obtained by the firewood processor. Furthermore, the reject (waste) needs to be removed from the firewood processor to safeguard continuous operation.

### Summary

The present invention overcomes these problems of prior art at least to some extent. To prevent the turning of the log during cutting (i.e. sawing), the firewood processor comprises an end stopper configured to support an end of the wood. Thus, the end stopper can be used to define the length of the cut log. Moreover, to facilitate easy use of the firewood processor and to enable the firewood processor to produce logs of different length, the position of the end stopper, relative to the saw is freely adjustable. Preferably the firewood processor comprises an actuator arranged to move the end stopper.

To minimize the unnecessary movement of the pressure plate, according to the invention, the position of the pressure plate is adjusted based on the position of the end stopper. In addition, the splitting of the log is achieved by moving the pressure plate towards the splitting wedge in a direction that is reverse to the direction, in which the wood is fed for the saw. In this way, the amount of unnecessary, empty, movements, can be automatically reduced, even if the firewood processor is used to produce firewood having a first length and different length and firewood having a second, different, length.

Other problems related to firewood processor are related to splitting the log to a suitable number of pieces. Naturally, a large log needs to be split into more pieces than a small log. This, however, requires another type of splitting wedge and/or re-splitting the firewood. Changing of a splitting wedge takes up some time and also decelerates the splitting process.

As for the problem is reducing the amount of reject, in an embodiment, a control unit of the firewood processor is configured to control an actuator by using information indicative of a thickness of a log to be split, to move a splitting wedge relative to a pressure plate in a transversal direction to a position, wherein the amount of high-quality firewood obtainable from said log to be split is maximized. The high-quality firewood has been split at least once and has a maximum width of 15 cm. In a preferred embodiment, the high-quality firewood has a minimum width of at least 5 cm. As the amount of high-quality firewood obtainable from said log is maximized, correspondingly, the amount of reject is minimized. Reject refers to wood other than high-quality firewood, e.g. pieces having a minimum width of less than 5 cm.

Still further, generally automation of the firewood processor may further speed up the splitting process. However, as a firewood processor comprises dangerous moving parts, such as a saw and a moving pressure plate, safety issues must be taken into account. Safety needs to be taken into account even in cases where the firewood processor has a malfunction. Therefore, the firewood processor comprises a protector or protectors. In an embodiment, the firewood processor is arranged to engage at least one such a tool of which operation is dangerous to a user only when at least one or two the protectors is in the closed position.

Embodiments of the invention are addressed to overcome these issues, that is, to speed up the overall splitting process and thus increase throughput.

The invention is defined by the independent claim 1.

Preferable embodiments are disclosed in the dependent claims.

### Brief description of the drawings

- Fig. 1a: shows a firewood processor having protectors, the protectors being in a closed position,
- Fig. 1b: shows a firewood processor without the protectors and with the user interface device,
- Fig. 1c: shows, in a perspective view, a firewood processor without the protectors in more detail,
- Fig. 1d: shows, in a top view, the firewood processor of Fig. 1c,
- Figs. 2a to 2c: show, in a side view, a cutting unit of the firewood processor,
- Fig. 3a: shows, in a top view, cutting unit and splitting unit of the firewood processor, and the movement an end stopper integrated into an end plane,
- Figs. 4a to 4d: show, in an end view, cutting unit and splitting unit of the firewood processor, and the movement of a log from the cutting unit to the splitting unit,
- Figs. 5a to 5f: show, in a top view, the process of cutting and splitting with a firewood processor having an end stopper integrated into an end plane,
- Figs. 6a and 6b: show, in a top view, parts of the process of cutting and splitting with a firewood processor having an end stopper and a separate end plane,
- Figs. 7a and 7b: show, in an end view, a splitting wedge in two different positions,
- Fig. 7c: shows, in an end view, details of the splitting wedge of Figs. 7a and 7b,
- Fig. 7d: shows, in a side view, the splitting wedge of Figs. 7a to 7c,
- Figs. 8a and 8b: show, in a perspective view, a splitting unit of a firewood processor, and the splitting wedge arranged in two different vertical positions,
- Figs. 9a to 9c: show, in an end view, the splitting unit of a firewood processor, and the splitting wedge arranged in two different vertical positions together with a log to be split, and
- Figs. 10a to 10c: show, in an end view, an embodiment of the splitting wedge together with a log to be split.

### Detailed description

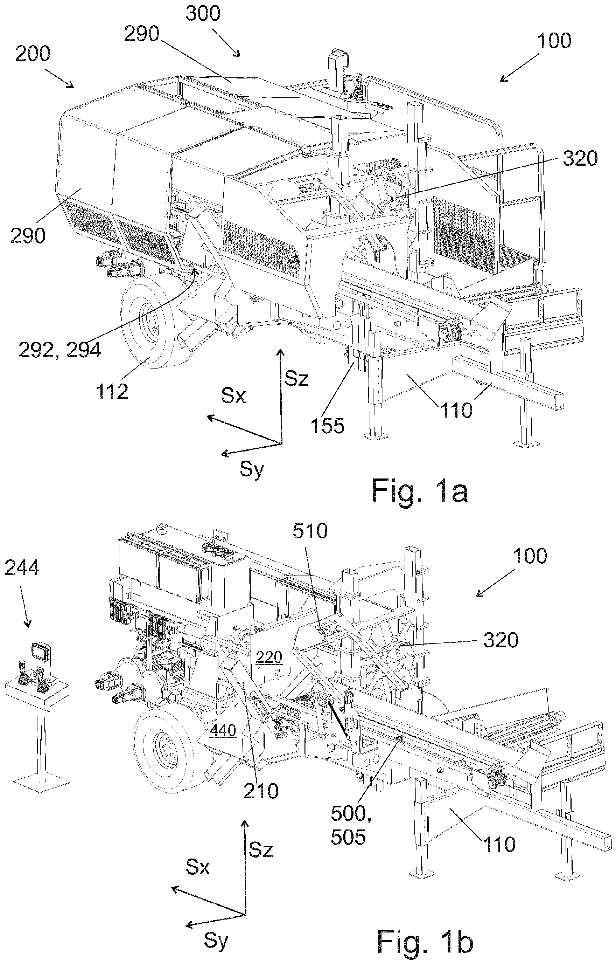

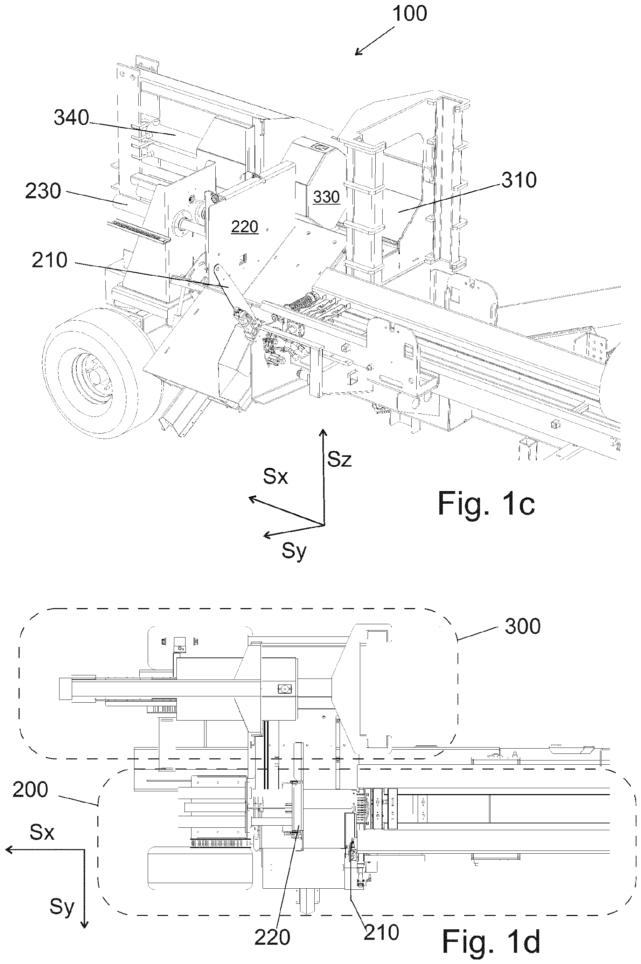

Figures 1a to 1c show a firewood processor 100 in a perspective view. The directions Sx, Sy, and Sz refer to three orthogonal directions. Sz may be, and in use typically is, parallel to the surface normal of the ground, on which the firewood processor 100 stands. Typically Sz is upwards vertical. The direction Sx refers to the direction of length of the firewood processor, and also to the length of the wood, at least when substantially straight wood is used for making firewood. In particular the positive direction +Sx refers to the direction in which the wood is fed for the saw 210. The chain of the saw 210 is visible in Fig. 1c; however, the chain of the saw 210 may be protected by an additional protector, as indicated in Fig. 1b. The firewood processor 100 comprises a frame 110 supporting the parts of the firewood processor 100. The frame 110 is configured to stand, e.g. on ground, while operating the firewood processor 100. As indicated in Figs. 1a to 1c, the firewood processor may comprise wheels 112 to facilitate easy transportation of the whole firewood processor 100.

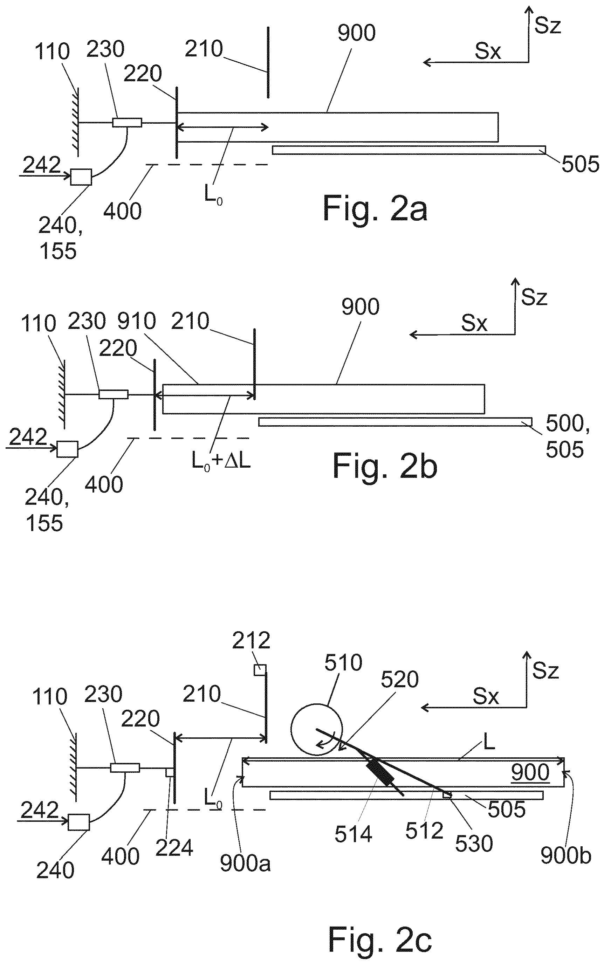

The firewood processor 100 comprises a cutting unit 200 and a splitting unit 300 (see Figs. 1a and 1d). The cutting unit 200 comprises the saw 210 for cutting (i.e. sawing) wood 900 to logs 910 (see Figs. 2a and 2b for reference numerals). The cutting unit 200 is configured to cut the wood 900 to logs 910 having a desired length L₀ using the saw 210. Referring to Figs. 1b to 1d, 2a and 2b, to determine the length L₀ of the log 910, the firewood processor comprises an end stopper 220. The end stopper 220 is arranged at a distance of at least L₀ from the saw 210 and configured to support an end of the wood 900. Preferably, the distance between the end stopper 220 and the saw 210 equals the desired length L₀ of the log 910 that will be sawn from the wood 900. However, as indicated below, a sensor may be used to stop the movement of the wood 900 such that a gap ΔL remain in between the end stopper 220 and an end 900a of the wood 900.

In general, the desired length L₀ of the logs 910 depend on user needs. Therefore, preferably the position of the end stopper 220 relative to the saw 210 and relative to the frame 110 of the firewood processor 100 is adjustable. Moreover, as indicated in Fig. 2c, the length L of the wood 900 is not necessarily an integer multiple of the desired length L₀ of the log 910. For example, in Fig. 2c, L is about 3.5×L₀. Thus, the wood will, generally have a remainder. For adapting the length L₀ to the length of the (remaining) wood and/or for handling the remainder, the distance between the saw 210 and the end stopper 220 in the longitudinal direction Sx freely adjustable. In an embodiment, the position of the end stopper 220 relative to relative to the frame 110 of the firewood processor 100 is freely adjustable.

An embodiment comprises an actuator 230 configured to move the end stopper 220 in relation to frame 110 of the firewood processor at least in the longitudinal direction Sx. Moreover, an embodiment comprises a controller 240 configured engage the actuator 230 in response to a control signal 242. The actuator 230 may comprise a hydraulic actuator, such as a hydraulic piston. Still further, with reference to Fig. 1b an embodiment comprises a user interface device 244 configured to form the control signal 242 in response to action of a user. The user interface device 244 may comprise at least one stick-type controller. The user interface device 244 may comprise two stick-type controllers. The user interface device 244 may comprise a display. The user interface device 244 may comprise at least one button. The user interface device 244 may comprise at least one rocker switch.

As is evident, in addition to controlling the position of the end stopper 220, the user interface device 244 may be used to control other operations, such as all the operations, of the firewood processor 100. The user may e.g. engage a conveyor 500 to move the wood 900 for the saw 210 to a suitable position (see Fig. 2a). When such an end stopper 220 is used, it is easy for the user to move the log 900 until it makes a contact with the end stopper 220.

However, to automate the firewood processor, an embodiment comprises a sensor 224 (see Fig. 2c) configured to sense whether an end (i.e. a first end 900a) of the wood 900 makes a contact with the end stopper 220. By using a signal of the sensor 224, a control unit may be used to engage some means, such as a wheel 510 (Figs. 1b and 2c), for moving the wood, until the end wood 900a of the wood makes a contact with the end stopper 220. In addition or alternatively, the sensor 224 may be configured to sense a distance between the end stopper 220 and a first end 900a of the wood 900. In this way, the speed of the wood 900 may be decelerated as it approaches the end stopper 224. The wood can be moved as long as the distance between the end 900a of the wood and the end stopper 220 is equal to ΔL, or until the end 900a of the wood 900 makes a contact with the end stopper. A control unit 155 of the firewood processor may be configured to operate the means 510 accordingly. The sensor 224 may be e.g. an ultrasound sensor. Other suitable types of sensor include optical sensors.

In addition, the firewood processor 100 may comprise a sensor configured to sense the position of the other end 900b of the wood 900. Thus, the firewood processor 100 may comprise a sensor or a sensor arrangement configured to give a signal indicative of the length L of the wood 900. The length information can be used, for example, to adjust the distance L₀ between the end stopper 220 and the saw 210, in order to minimize the length of a remaining piece, or to adjust the distance L₀ between the end stopper 220 and the saw, such that no remaining piece will be formed. It is noted that when the length of the wood, L, is an integer multiple of the length L₀ of the log 910, no remaining piece will be formed. It is also possible that some variation for the firewood length is allowed, e.g. the length L₀ may be free chosen from the range L_{0,min}<L₀<L_{0,max}; and in some cases such a suitable firewood length can be found from such a range that no remainder will be produced. However, provided that the applicable minimum length L_{0,min} is reasonably close to the maximum length L_{0,max}, it is possible that a remainder will be left over, at least for a certain length L of the wood.

The length information L can alternatively be used such that when the length L is more than L₀ but less than 2×L₀, the remainder will not be sawn, but the last log will be longer. The length information L can alternatively be used such that when the length L is more than L₀ but less than L₀+L₁, where L₁<L₀, the remainder will not be sawn, but the last log will be longer than L₀ but by at most the amount L₁. When the length L is in the range L₀+L₁<L<2×L₀, the remainder can be sawn. Moreover, in such a case, one can e.g. shorten the last two logs, e.g. by setting L₀=L/2, i.e. cutting the last piece of wood 900 into two halves of equal length.

As indicated in the aforementioned lines, by having (i) an end stopper 220 that is freely movable and (ii) a sensor or a sensor arrangement configured to measure the length L of the wood 900, it is possible to automate the cutting process according to user needs. A user may e.g. tend to
- optimize the amount of firewood having the length L₀ or
- minimize the size of the remainder or
- optimize the amount of firewood having the length from L_{0,min} to L_{0,max}.

Figs 2a and 2b refer to an embodiment, wherein the end 900a of the wood is configured to make a contact with the end stopper 220. Before starting to cut and separate the log 910 from wood 900, the distance between the end stopper 220 and the saw 210 has an initial value L₀ corresponding to the desired length of the log 910, as indicated above. It has been noticed that if the distance between the end stopper 220 and the saw 210 is constant throughout the sawing, the saw chain or saw blade becomes easily jammed. Therefore, in an embodiment, the firewood processor 100 is configured to move the end stopper 220, before separating the log 910 from wood 900, such that the distance between the end stopper 220 and the saw 210 increases. In Fig. 2b, this distance has been increased by a first tolerance ΔL. Furthermore, to ensure that the length of the logs remains constant, the firewood processor is configured to move the end stopper 220, after separating the log 910 from wood 900, such that the distance between the end stopper 220 and the saw 210 decreases to the initial value L₀. Both of these movements may be automated. Preferably, firewood processor 100 is configured to move the end stopper 220 automatically, i.e. without a user-given control signal; both away from the saw 210 and towards the saw 210 as indicated above. Also preferably, the firewood processor 100 is configured to move the end stopper 220 by means of the actuator 230. The first tolerance ΔL by which the firewood processor 100 is configured to move the end stopper 220 for facilitate sawing without jamming is preferably reasonably short, such as from 1 cm to 10 cm, more preferably from 2 cm to 8 cm, such as from 3 cm to 6 cm, such as from 4 cm to 5 cm. The movement of the log during sawing is better in control, when this distance is short, because then the end stopper 220 also supports the end 900a (see Fig. 2b) of the log during sawing, even in the case only the free end 900a would start to fall at the end of the sawing. For example in Fig. 2b, the end corresponding to the end 900a of Fig. 2c, might start to fall in the direction - Sz. When ΔL is small, the end stopper 220 starts reasonably soon to support the log 910.

In addition to the proper movement distance, the size of the end stopper affects it ability to support the end 900a (see Fig. 2b) of the log during sawing, even in the case only the free end 900a would start to fall at the end of the sawing. A large end stopper 220 supports the end 900a of the log better than a small one. In an embodiment, the cross sectional area of the end stopper 220, the cross sectional area being parallel to a plane having surface normal in the longitudinal direction Sx (see Fig. 1b), is at least 50 (cm)² or more preferably at least 100 (cm)² or at least 200 (cm)². As indicated above, the wood 900 is also cut with the saw 210 such that the cutting plane has a surface normal to the longitudinal direction Sx. In an embodiment, the end stopper has a planar end facing the saw and having a surface normal to the longitudinal direction Sx. The area or the planar end may be e.g. at least 50 (cm)² or more preferably at least 100 (cm)² or at least 200 (cm)².

Referring to Figs. 1c, 3, and 8a, firewood processor 100 comprises a splitting chute 310 configured to receive a log 910b from the cutting unit 200. The firewood processor comprises a splitting wedge 320 configured to split a log 910b when the log 910b is pressed to the splitting wedge 320 and/or the splitting wedge 320 is pressed to the log 910b. The firewood processor comprises a pressure plate 330 arranged to support the log 910b while splitting the log 910b. The firewood processor comprises means 340 for moving the pressure plate 330 and/or the splitting wedge 320 towards each other in such a way that a log arranged in between the pressure plate 330 and the splitting wedge 320 is configured to be split by said movement.

In an embodiment, the means 340 is configured to move the pressure plate 330 relative to the frame 110 of the firewood processor to move and split the log 910 that is arranged on the bottom of the splitting chute 310. Correspondingly, in an embodiment, the splitting wedge 320 is configured to be stationary (i.e. not to move) relative to the frame 110 during splitting. However, as indicated later, in an embodiment, the splitting wedge 320 may be vertically moved when a log 910 is not being split, i.e. before and/or after a log has been split.

The means 340 for moving the pressure plate 330 and/or the splitting wedge 320 may comprise e.g. a hydraulic piston. In a preferred embodiment, the means 340 is configured to move the pressure plate in a direction -Sx that is reverse relative to such a direction +Sx, in which the wood 900 is fed for the saw 210. In other words, before cutting the log 910, the wood 900 is arranged to be moved in a first direction +Sx in such a way that an end of the wood 900 approaches the end stopper 220, and preferably makes a contact with it 220. Moreover, the pressure plate 330 is configured to push the log 910 in a second direction -Sx towards the splitting wedge 320 to split the log 910. The second direction -Sx is reverse to the first direction +Sx.

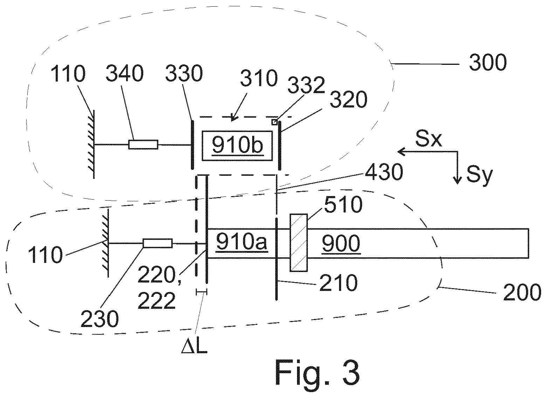

This has the beneficial effect that the position of the pressure plate 330 before splitting can be adjusted to such a position that minimizes the unnecessary movements of the pressure plate 330. In particular, as depicted in Figs. 2a and 2b, the position of the end stopper 220 defines the length of the log 910. As depicted in Fig. 3, the pressure plate 330 can thus easily be moved to such a place that the
- the log (910a, 910b) can be moved to the splitting chute, and
- when the log has been moved to the splitting chute, the pressure plate 330 is located close to an end of the log.

The meaning of the term "close" will be discussed below.

As depicted in Fig. 3, the end stopper 220 (and/or an end plate 222) limits the movement of the log, whereby it is known that the pressure plate 330 needs to be moved, after splitting a log and in the direction +Sx, only to such a location that the pressure plate passes the end plate 222 or the end stopper 220.

Therefore, in an embodiment, the firewood processor 100 is configured to adjust the position of the pressure plate 330 based on the position of the end stopper 220. Preferably, the firewood processor 100 is configured to adjust the distance between the pressure plate 330 and the splitting wedge 320 based on the distance between the end stopper 220 and the saw 210 such that the distance between the pressure plate 330 and the splitting wedge 320 is at most a second tolerance greater than the distance between (i) the end stopper 220 or and end plane 222 and (ii) the saw 210. As indicated in Figs. 2b, 5b, and 6a, this distance equals the desired length L₀ added by the first tolerance ΔL. The second tolerance may be e.g. from 1 cm to 20 cm; preferably from 2 cm to 15 cm; and more preferably from 4 cm to 10 cm. A large second tolerance increases the amount of the unnecessary movements of the pressure plate 330. A small second tolerance increases the risk of a log turning when being moved into the splitting chute; the turning further increasing the risk of jamming.

For a proper positioning of the pressure plate 330, the firewood processor 100 may comprise a sensor 332, such as a laser sensor, configured to sense the position of the pressure plate 330. The sensor 332 is configured to give a signal indicative of the position of the pressure plate 330. Moreover, in an embodiment, the firewood processor 100 is configured to adjust the position of the pressure plate 330 based on (i) the position of the end stopper 220 or the end plane 222 and (ii) the signal indicative of the position of the pressure plate 330. The firewood processor may be configured to adjust the distance between the pressure plate 330 and the splitting wedge 320 as indicated above.

Referring to Figs. 1b and 2a to 2c, an embodiment of the firewood processor 100 comprises means 500 for feeding wood 900 for the saw 210. The means 500 may comprise at least one of a table 505, such as a roller table, and a conveyor, such as a belt conveyor. Referring to Fig. 2c, the wood 900 can be moved on the table 505 e.g. by using a feed roller 510. The feed roller, when rotating in the direction as indicated in Fig. 2c, and when in contact with the wood 900, moves the wood towards the end stopper 220, and for the saw 210. In case a feed roller 510 is used, it is preferably arranged close to the saw 210 for handling of also short wood. In case a belt conveyor is used underneath the wood 900, such a roller 510 is not needed. However, a roller 510 arranged above the table 505 may be used to measure the thickness (ti, t₂, t₃) of wood and/or to prevent too thick wood from entering further into the cutting unit.

In addition or alternatively, a separate (optionally additional) means 500 for feeding wood 900 can be used when arranged in connection with a firewood processor 100. Also the separate means 500 may comprise a wood conveyor. Thus, an arrangement comprises a firewood processor 100 and a wood conveyor 500 for conveying uncut wood 900 to the cutting unit 200. The conveyor 500, 505, 510 for moving wood 990 to the cutting unit 200 can be operated e.g. using the interface device 244 (Fig. 1b).

The interface device 244 may be coupled to a main control unit 155 (Fig. 1a), which may be configured to control the operation of the firewood processor 100, e.g. via other control units, such as 240. As is evident, the main control unit 155 can also directly control e.g. the actuator 230.

An embodiment of the firewood processor 100 comprises a protector 290 arranged to protect the user from the saw 210. The protector 290 is configured to be in an open position and a closed position. In the closed position, the protector 290 limits an interior of the firewood processor. In the closed position, the protector 290 is arranged to prevent the user of the firewood processor 100 from pushing his hands or other body parts into the interior of the firewood processor 100. To facilitate handling of the log 910, in the open position, the protector 290 is arranged to allow the user of the firewood processor to handle the log 910 arranged in the interior of the firewood processor, such as in the cutting unit 200 or the splitting unit 300. The firewood processor may comprise separate protectors for the cutting unit 200 and the splitting unit 300.

For safety reasons, in an embodiment, the saw 210 is configured such that it can only be engaged provided that the protector 290 is in the closed position. In an embodiment, the pressure plate 330 is configured such that it can only be engaged provided that the protector 290 is in the closed position. In an embodiment, the means 400 for moving the log 910 from the cutting unit 200 to the splitting unit 300 is configured such that it can only be engaged provided that the protector 290 is in the closed position. Since different protectors can be used for different parts, in an embodiment the firewood processor 100 is configured such that at least one of
- the saw 210,
- the pressure plate 330 and
- the means 400 for moving the log 910 from the cutting unit 200 to the splitting unit 300
can only be engaged provided that the protector 290 is in the closed position.

To sense the position of the protector 290, the firewood processor 100 comprises a first protector position sensor 292 configured to sense the position of the protector 290 and give a first signal S₁ indicative of the position of the protector 290.

However, as sensors may break in use, in an embodiment, the firewood processor comprises a second protector position sensor 294 configured to sense the position of the protector 290 and give a second signal S₂ indicative of the position of the protector 290.

The operation of the firewood processor 100 can be safely automated using these two sensors. For example, if one of the sensors is broken, only manual operation may be possible. Manual operation refers to situation, wherein a process step is made only when a user-given signal specific to that process step is received. In contrast, in an automated process multiple subsequent steps are performed without user-given control signals. The control unit 155 may be configure to receive the signals S₁ and S₂ from the sensors 292, 294, and a signal from the user interface device 244; and configured to engage a tool of the firewood processor according to these principles.

Therefore, in an embodiment, provided that only one of the first signal S₁ and the second signal S₂ is indicative of the protector 290 being in the closed position, the firewood processor configured such that (i) the saw and (ii) the means for moving the pressure plate and/or the splitting wedge towards each other can be engaged only manually.

However, when both the sensors 292 and 294 are functional, the operation can be safely automated. Thus, in an embodiment, provided that both the first signal S₁ and the second signal S₂ are indicative of the protector 290 being in the closed position, the firewood processor 100 is configured to automatically
- saw a log 910 from the wood 900, and/or
- move the log 910 from the cutting unit 200 to the splitting unit 300, and/or
- split the log 910 by means of the pressure plate 330 and the splitting wedge 320.

The term automatically refers to operation without a user-give control signal; at least without a user-given control signal related to the automated feature. Naturally, a user may e.g. turn on the firewood processor, even if many other functions are automated.

Furthermore, when both the sensors 292, 294 are functional and the protector 290 is in the open position, the operation of the moving parts of the firewood processor may be prevented. Thus, in an embodiment, provided that both the first signal S₁ and the second signal S₂ are indicative of the protector 290 being in the open position, the firewood processor 100 is configured such that (i) the saw and/or (ii) the means for moving the pressure plate and/or the splitting wedge towards each other cannot be engaged using only one controller of the firewood processor without opening the firewood processor.

The conveyor 500 or the firewood processor 100 may comprise an opening or gate 520 (Fig. 2c), through which the wood 900 is fed for the saw 210. In an embodiment, the width of the opening or the gate 520 is selected such that the opening or the gate is configured to pass only sufficiently thin wood 900 to the saw 210. A too thick log 900 might cause malfunction of the firewood processor 100. The width of the opening or gate may be e.g. from 370 mm to 900 mm, such as 380 mm, 410 mm, 440 mm, 470 mm, 500 mm, 530 mm, 560 mm, or 600 mm. The width of the opening or gate may be e.g. from 370 mm to any one of 440 mm, 470 mm, 500 mm, 530 mm, 560 mm, 600 mm, 700 mm, or 800 mm. The proper width depends on the structure of the other components of the firewood processor 100, in combination determining the maximum thickness of the wood 900 the firewood processor 100 can process. In addition or alternatively, the saw 210 can be configured such that it can cut only sufficiently thin wood. Examples of limiting thicknesses are the same as for the opening of the gate. This can be done e.g. by preventing the saw 210 from rising higher than the limiting thickness, as measured from the top surface of the conveyor 500. In addition or alternatively, the length of the saw 210 may be configured to be so short that it cannot fully cut too thick wood 900.

As an example, in Fig. 2c, the feed roller 510 is fixed to the table 505 by a bar 512 and a hydraulic piston 514. By extending or contracting the piston 514, the height of the feed roller 510 can be increased or decreased. The maximum length of the piston 514 also determines the maximum value of the opening 520.

Moreover, the firewood processor 100 may comprise a sensor 530, such as a position sensor 530 for the feed roller 510, configured to measure a quantity related to the thickness of the wood 900, and configured to give a signal indicative of the thickness of the wood 900. As an example, in Fig. 2c a distance equal to the thickness of the wood 900 is left in between the feed roller 510 and the table 505. The signal indicative of the thickness is given by the sensor 530 sensing the inclination of the bar 512.

Information indicative of the thickness of the wood 900 can be utilized when moving the saw. For example, after the log 910 has been separated from the wood 900, the saw 210 is lifted. By using the information indicative of the thickness of the wood, one can lift the saw only by the needed amount, and conversely, the saw needs not to be lifted to an extreme position. In this way, unnecessary movements of the saw 210 may be minimized. In an embodiment, the firewood processor is configured to
- determine information indicative of the thickness of the uncut wood 900,
- use this information for determining a position of the saw, and
- lift the saw 210 to said position.

The position may be such that the saw blade or saw chain is lifted only about 1 cm to 5 cm higher than the height defined by the upper boundary of the wood 900.

In addition, information indicative on the thickness (ti, t₂, t₃) can be utilized in the splitting unit 300, as will be detailed below.

An embodiment of the firewood processor 100 comprises a sensor 212 (Fig. 2c) configured to sense the position of the saw 210 and to give a signal indicative of the position of the saw 210. The firewood processor 100 may be configured to lift the saw 210 as indicated above by using
- the signal (of the sensor 212) indicative of the position of the saw 210 and
- the signal (of the sensor 530) indicative of the thickness of the wood 900.

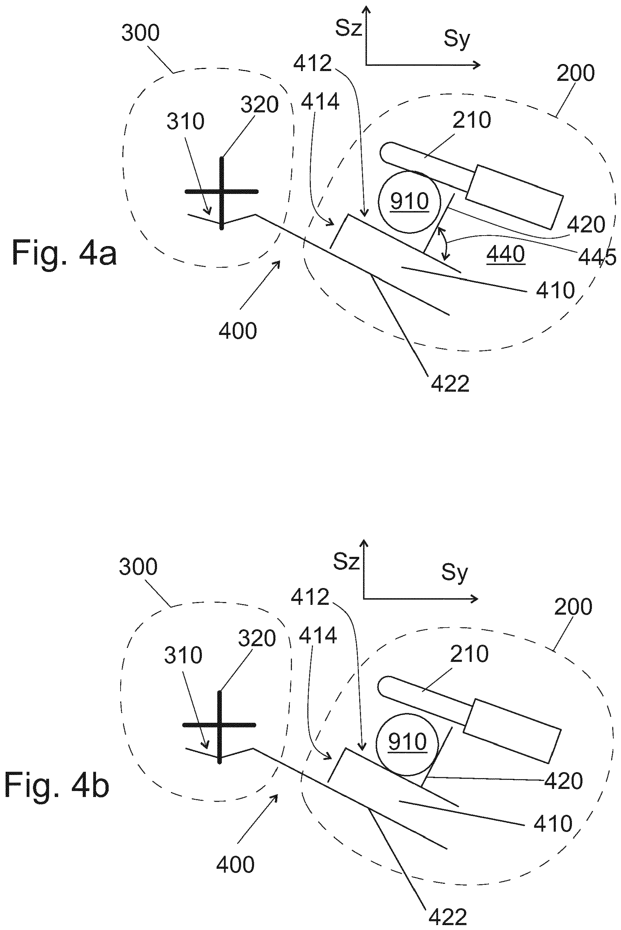

Referring to Figs. 4a to 4d, a firewood processor 100 comprises means 400 for moving the log 910 from the cutting unit 200 to the splitting unit 300; such as means for moving the log 910 from the saw 210 onto a bottom of the splitting chute 310. In an embodiment the means 400 comprises a pusher 410 having a first surface 412 and a second surface 414. Furthermore the means 400 comprises a first support 420 and a second support 422. Referring to Fig. 4a, during sawing, the uncut part of the wood 900 is supported by the table 505 (see Fig. 2b). The first surface 412 is configured to support, from below, the log 910 that is cut from wood 900. In order to allow cutting of also curved tree trunks or branches or similar, the at least part of first surface 412 and at least part the support 420 may be arranged lower than the table 505.

Referring to Fig. 4b, when the log 910 has been fully cut, i.e. the log 910 is separated from the wood 900, the first surface 412 of the pusher 410 is, in combination with the first support 420, configured to support the log 910 from below. Moreover, preferably the first surface 412 of the pusher 410, the first support 420, and the table 505 are configured such that a straight log 910 drops at most 10 cm when it becomes separated from the wood 900. For example, the intersection of the first surface 412 of the pusher 410 and the first support 420 may be located at most 15 cm below the upper surface of the support 505 that is configured to support the wood while sawing.

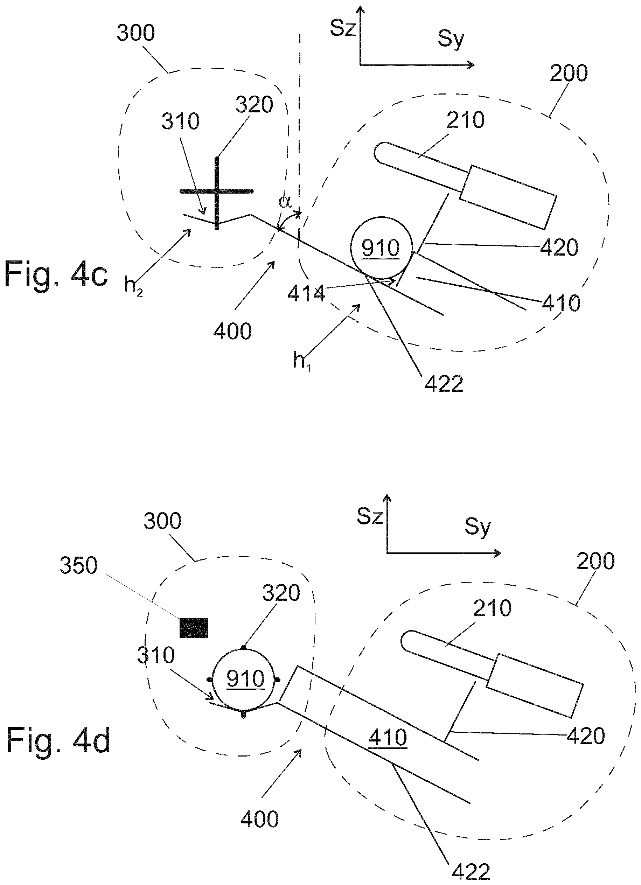

Referring to Fig. 4c, when the log 910 is moved to the splitting unit, the pusher 410 is first moved in such a way that the log is allowed to drop onto the second support 422. In this position, the log 910 is received at a first position having a first height h₁. Moreover, the log 910 is being supported by the second support 422 from below, and by the second surface 414 of the pusher 410 from a side. Preferably, the pusher 410 is designed in such a way that the log 910 is configured to drop only a relatively short distance, such as at most 30 cm or at most 20 cm. The height of the pusher 410 may be e.g. at most 30 cm or at most 20 cm. This ensures that the position of the log 910 is in better control throughout transferring it to the splitting chute 310.

Referring to Fig. 4d, when the log 910 is moved to the splitting unit, the pusher 410 moves along the second support 422 towards the splitting chute 310, and the pusher 410 pushes the log 910 onto the bottom of the splitting chute 310. While being moved, the log 910 is being supported by the second surface 414 of the pusher 410 and the second support 422.

Thus, the means 400 for moving the log 910 from the saw 210 to the splitting chute 310 is configured to support the log 910 from at least two sides of the log. Neither of these sides is an end of the log. In other words, a tangent plane of a first of the at least two sides of the log comprise a direction parallel to the longitudinal direction Sx and a tangent plane of a second of the at least two sides of the log comprise a direction parallel to the longitudinal direction Sx.

When the log 910 is supported from at least two such sides, the process of moving is well controlled, and e.g. turning of the log is effectively prevented. This reduces the risk of malfunctioning.

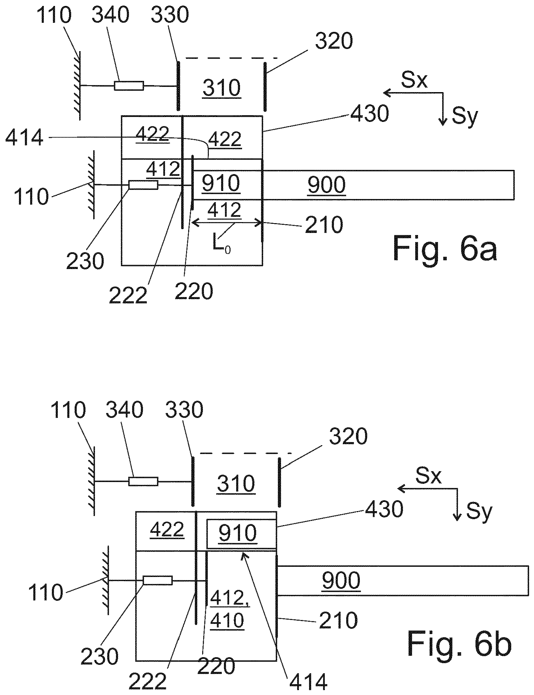

An end of the log is supported. Referring to Fig. 3, the firewood processor comprises an end plane 222 having a surface normal to the longitudinal direction ±Sx of the wood 900 (or the log 910). The end plane 222 is configured the support an end of the log 910 while moving the log to the splitting chute 310. As indicated in Fig. 3, the end stopper 220 may be integrated with the end plane 222. However, as indicated in Fig. 6a, the end plane 222 may be separate from the end stopper 220 such that the end stopper 220 is movable independently of the end plane 222.

As indicated in Figs. 4c and 4d, in an embodiment, the splitting chute 310 is arranged at such a height that the splitting chute 310 is configured to receive the log from the means 400 for moving the log 910 from the saw 210 to the splitting chute 310 into a higher position than the first position (see above, the first position being the position on the second support 422, where the log 910 is received after having been separated from the wood 900). Thus, the splitting chute 310 is configured to receive the log 910 into a second position having a second height h₂, wherein the second height h₂ is greater than the first height h₁.

By moving the log 910 upwards (and preferably also sideways), the position of the log 910 during its transport is better controlled. If the log was allowed to freely roll, drop, or glide by gravity, uncontrolled turning could occur, which might results in jamming of the firewood processor, such as an incorrectly oriented log being jammed in the splitting wedge. Similar problems might arise, is the log 910 was moved horizontally while being supported from below and pushed from one side without being supported from another side.

For the stability of the firewood processor 100, one factor is the height of the firewood processor 100 itself, which should preferably be low. Therefore, the splitting chute 310 is preferably not arranged on the same vertical level as the saw 210. Thus, in an embodiment, the means 400 for moving the log 910 from the saw 210 to the splitting chute 310 is configured to move the log 910 in a direction that forms an angle α (see Fig. 4c) with the vertical direction ±Sz. The angle may be e.g. at least 15 degrees or at least 30 degrees. Preferably the angle is at least 45 degrees or at least 60 degrees. In case the direction is not horizontal, the direction forms two angles with the vertical direction; depending on whether the upward vertical or the downward vertical is considered. The angle referred to above refers to the smaller of these two angles, i.e. the one that is also at most 90 degrees. Preferably, the means 400 for moving the log 910 from the saw 210 to the splitting chute 310 is configured to move the log 910 in the direction forming the aforementioned angle α with the direction +Sz, which in typical use condition is the upward vertical (see above).

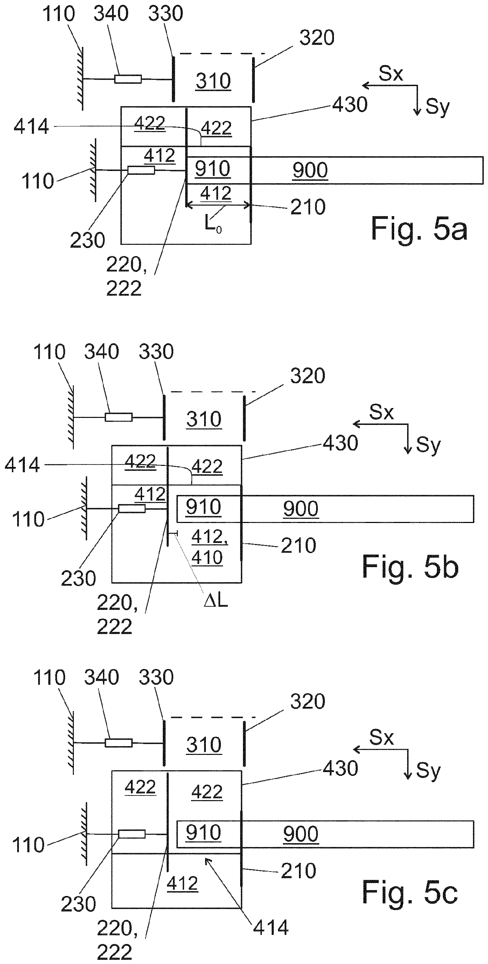

Figures 5a to 5f describe the process of cutting a log, moving the log, and splitting the log using an embodiment of the firewood processor 100. These figures describe some parts of the process from a top view, while figures 4a to 4d describe the same process from an end view.

As shown in Fig. 5a, wood 900 is moved for the saw 210 in the direction +Sx towards the end stopper 220 until an end of the wood 900 (i.e. the end comprising the log 910 to be sawn) makes a contact with the end stopper 220, or is arranged reasonably close thereto. If the distance between the end 900a (Fig. 2c) and the end stopper 220 is measured, the end 900a needs not to make a contact with the end stopper. Thus the proper length L₀ of the log 910 is ensured. The pusher 410 (see Figs 4a to 4d) is situated such that the log 910 is above the first surface 412 of the pusher 410.

As shown in Fig. 5b, while sawing the wood 900, or before sawing the wood but after ensuring the proper length of the log, the end stopper may moved a distance ΔL to prevent the saw 210 from jamming, as discussed above. In case the distance between end 900a and the end stopper 220 is measured, it is possible to move the wood 900 in such a way that the distance ΔL is left in between them (900a, 220) without moving the end stopper 220. When the log 910 has been separated from the wood 900, the log falls onto the first surface 412 of the pusher 410.

As shown in Fig. 5c, subsequently the pusher 410 is moved away from the splitting chute 310 (see, the second surface 414 in particular) in such a way that the log 910 falls onto the second support 422.

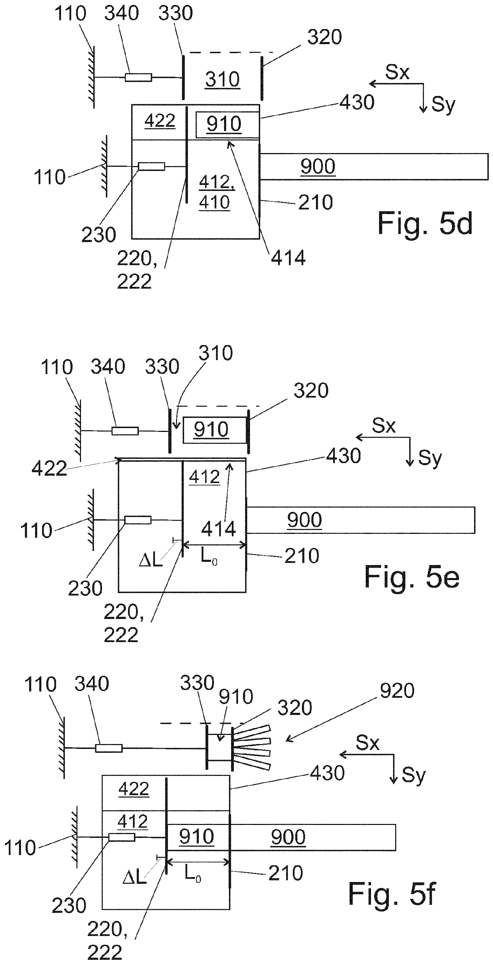

As shown in Fig. 5d, by moving the pusher 410 towards the splitting chute 310, the log 910 is pushed along the second support 422 towards the splitting chute 310, and finally at least partially into the splitting chute 310. During the transfer, the end stopper 220 or and end plane 222 is situated at a slightly greater distance from the saw, compared to the length L₀ of the log 910 (see Figs. 5b to 5d). This allows to move to log 910 without the log being jammed in between (i) the end stopper 220 or an end plane 222 and (ii) another plane 430. The other plane 430 is configured to support is configured the support the other end of the log 910 while moving the log to the splitting chute 310; the end other than the one supported by the end plane 222 or the end stopper 220.

As shown in Fig. 5e, when the log has been moved at least partially into the splitting chute 310, the end stopper 220 may be moved back to the initial position having the distance L₀ from the saw 210. Thus, a subsequent log 910 can be sawn to the same length.

As shown in Fig. 5f, by engaging the means 340 for moving the pressure plate 330, the pressure plate 330 is moved towards the splitting wedge 320. In an embodiment, the pressure plate is moved in the reverse direction, i.e. in the direction -Sx. Thus, the log 910 in the splitting chute 310 is split into pieces 920 of firewood. At the same time, the remaining wood 900 can be moved for the saw 210, as indicated in Fig. 4a. After splitting the log 910, the pressure plate 330 can be moved so that the subsequent log 910 can be received in the splitting chute 310. The position of the pressure plate may be adjusted based on the position of the end stopper 220.

One problem is some firewood processors is that a too short a log 910 may easily jam the firewood processor 100. Short logs may be e.g. the aforementioned remainders, when the length L is not an integer multiple of L₀. Short logs may be hard to handle, because they tend to rotate more easier than long logs. Moreover, the quality requirements of firewood may be such that the pieces 920 of firewood should have the same length. Thus, an embodiment of the firewood processor 100 comprises an outlet 440 (see Figs. 1b and 4a) for letting out a log 910 from the firewood processor 100 from a location that is not located within the splitting unit 300. Preferably, the firewood processor 100 is configured to let out a log 910 before the log 910 enters the splitting chute 310. More preferably, the firewood processor 100 is configured to let out a log 910 from the position, wherein the log 910 is after having been sawn, but before it has been moved towards the splitting unit 300. For example, a firewood processor may be configured to let out a log from the cutting unit 200.

Referring to Fig. 4a, an embodiment further comprises means 445 for letting out a log 910 from the firewood processor via an outlet 440 arranged in the cutting unit 200. The means 425 may e.g. be configured to turn down the first support 420, as shown in Fig. 4a, in such a way that the log 910 is removed from the firewood processor via the outlet 440. when the support 420 is turned down, the log 910 may roll out of the firewood processor via the outlet 440 (see also Fig. 1b).

In figures 5a to 5f the pusher 410 is arranged above the second support 422. Moreover, the end stopper 220 is arranged above the pusher 410. Still further in figures 5a to 5f the end stopper 220 is an integral part of an end plane 222, and therefore they move in a similar way and at the same time. This, however, limits the speed of operation of the firewood processor. This is because the former log is moved the whole way into the splitting chute 310 before a subsequent log can be measured and sawn.

In another embodiment, the end stopper 220 is configured to move independently of the end plane 222. In such an embodiment, the delay for moving the end stopper back to the initial position is somewhat less, whereby the process may be faster. Such an embodiment is illustrated in Figs. 6a and 6b. These figures show the process of cutting, moving and splitting at the same instances of time as Figs. 5a and 5d, respectively.

With reference to Fig. 6a, such a firewood processor comprises the end stopper 220 and an end plane 222, the end plane 222 being movable independently of the end stopper 220. In Fig. 6a, the end stopper 220 is moved to the initial position, where it defines the length L₀ of the log 910, as discussed above. Before or while sawing, the end stopper 220 can be moved e.g. to the same level as the end plane 222, e.g. by a distance ΔL, in a similar way as shown in Fig. 5b. The process may proceed as indicated in Figs. 5c and 5d and discussed above.

However, as shown in Fig. 6b (corresponding to Fig. 5d), as soon as the log 910 has been pushed such that is has passed the whole end stopper 220, the end stopper 220 may be moved towards to saw 210 to its initial position, while the end plane 222 continues to guide the log 910 in the means 400 for moving the log into the splitting chute 310. It is further noted that after having split the log, the pressure plate 330 can be moved to a position according to the position of the end plane 222, in a similar way as discussed above for moving the pressure plate 330 according to the position of the end stopper 220.

Moreover, to facilitate easy operation of the firewood processor, in particular, when changing the desired length of the log, the firewood processor 100 is configured to adjust the position of the end plane 222 based on the position of the end stopper 220. For example, the firewood processor 100 may be configured to move the end stopper 220 at the same time and by the same amount as the end plane 222 (e.g. when the desired length L₀ is changed). However, as indicated above, the firewood processor 100 may be further configured to move the end stopper 220 independently of the end plane 222 (e.g. for measurement purposes, as discussed in connection with Figs. 6a and 6b).

As an example, the user may use the interface device 244 to move the end plane 222 to correspond to the length ΔL+L₀, wherein ΔL is the first tolerance (as discussed above) and L₀ is the desired length of the log 910. As a response, the firewood processor 100 may move both the end plane 222 and the end stopper 220 the same amount, and preferably at the same time. While processing wood 900, the firewood processor may be configured to move only the end stopper 220 towards and away from the saw 210 by the distance ΔL as discussed above.

As discussed above, an embodiment of the firewood processor comprises an end plane 222 having a surface normal to the longitudinal direction Sx of the wood to be sawn. The firewood processor may further comprise another plane 430 substantially parallel to the end plane 222. These planes may be substantially parallel, when an angle between their surface normals (if any) is less 15 or less than 5 degrees. The means 400 for moving the log 910 from the saw 210 to the splitting chute 310 is configured to move the log 910 in a direction perpendicular to the surface normal of the end plane 222 from the saw 210 to the splitting chute 310 in a channel limited from the sides by the end plane 222 and the other plane 430. The sides (222, 430) of the channel limit the movement of the log, in particular at its ends. As indicated in the figures, the channel is limited from below by the second support 422. Still further the log 910 is supported from a side by the second surface 414 of the pusher 410. Moreover, the firewood processor 100 is configured to adjust the positions of the end plane 222 and the end stopper 220 by the same amount in response to a control signal. More specifically, the firewood processor 100 may configured (i) to adjust the position of the end plane 222 based on the position of the end stopper 220 or (ii) to adjust the position of the end stopper 220 based on the position of the end plane 222.

As for the problem of reducing the amount of residual wood, it has been found that a splitting wedge 320, of which location is fixed relative to the frame 110 oftentimes produces a lot of residual. The term residual refers to pieces 920 that are not high-quality firewood in the sense discussed above. The term residual may refer to unsplit wood or split wood having a minimum width of less than 5 cm. It has been found that by moving the splitting wedge 320 relative to the frame 110 of the firewood processor an in a transversal direction the amount of residual may be reduced, in particular, if the position of the splitting wedge is properly adjusted based on the thickness (t₁, t₂, t₃) of the log 910 that will be split next.

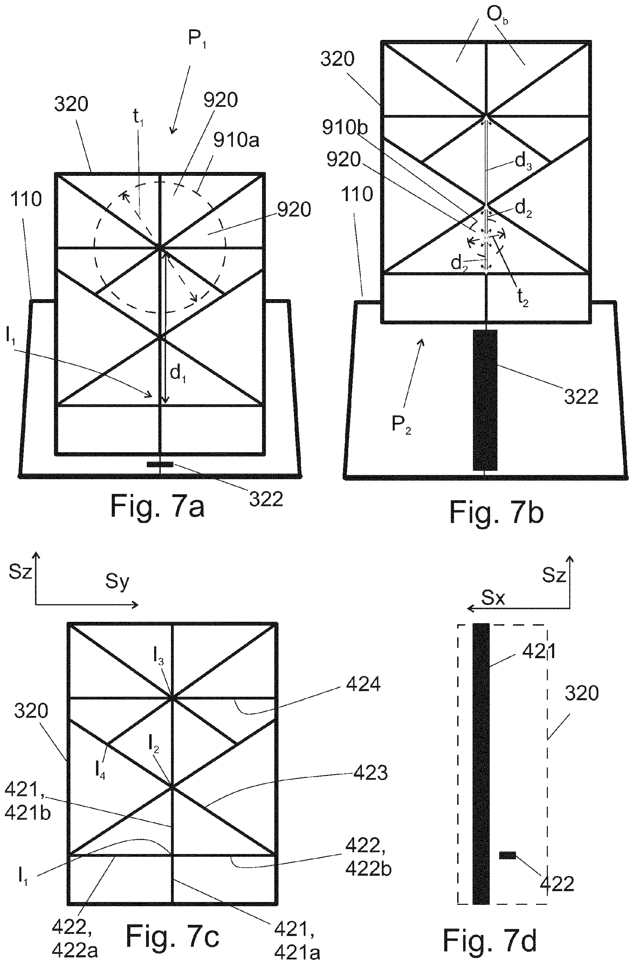

Figs. 7a and 7b show, in an end view a splitting wedge 320 (see also Figs. 1a and 1b). The splitting wedge 320 can be moved in a direction that is transverse to the direction of movement of the pressure plate 330, e.g. vertically, so that the log 910 will be split into a required number of pieces. As indicated in the figures 7a and 7b, the thicker the log 910, the more pieces 920 of firewood will be obtained therefrom. For example in Fig. 7a a thick log 910 with first thickness t₁ is split into eight pieces 920, while in Fig. 7b a thin log 910 with second thickness t₂ is split into two pieces 920.

To optimize the position of the splitting wedge 320, an embodiment of the firewood processor 100 comprises a sensor (e.g. 350 of Fig. 4d or 530 of Fig. 2c) configured to measure the thickness of a log and to give information indicative of the thickness of the log. The sensor 350 is configured to measure the thickness of the log 910 when the log is arranged in the splitting chute. The sensor 530 is configured to measure the thickness of the log 910 when the log is arranged in the cutting unit. Moreover, the firewood processor 100 comprises an actuator 322 (Fig. 7a and 7b), such as a hydraulic piston, that is configured to move the splitting wedge 320 relative to the pressure plate 330 also in a transversal direction perpendicular to the longitudinal direction Sx. As indicated in Figs. 7a and 7b, in an embodiment, the actuator is configured to move to splitting wedge 320 in at least the direction ±Sz (for definition see above). The actuator may be configured to move the splitting wedge in at least a substantially vertical direction. In addition, the actuator may be configured to move the splitting wedge also in another direction that is perpendicular to Sx, such as substantially horizontal direction. However, to simplify the firewood processor 100, preferably, the actuator 322 is configured to move the splitting wedge 320 back and forth only in one transverse direction relative to the frame 110. Such a direction is preferably the direction ±Sz. Preferably, during splitting, only the pressure plate 330 in configured to move. Thus, in an embodiment, the splitting wedge is configured move relative to the ground, on which the firewood processor 100 stands.

Moreover, in one of such embodiments, the firewood processor 100 comprises a control unit 155. The control unit 155 is configured to receive, from the sensor (350, 530), information indicative of the thickness of the log 910. Moreover, the control unit 155 is configure to control the actuator 322, by using the information indicative of the thickness of the log 910 that will be split next, to move the splitting wedge 320 relative to said pressure plate 330 in said transversal direction (±Sz, ±Sy) to a position, wherein the amount of high-quality firewood obtainable from said log 910 is maximized.

The term high-quality firewood refers to such firewood that
- has been split at least once and
- has a width from 5 cm to 15 cm.

The term "width" refers to a measure perpendicular to the length of the split firewood 920. Thus, the width may have multiple values depending on the orientation of measurement. More precisely put, the high-quality firewood may refer to such a piece 920 that
- has been obtained by splitting a log 910 at least once,
- has a minimum width of 5 cm, and
- has a maximum width of at most 15 cm.

The feature "has been obtained by splitting a log 910 at least once" may be evidenced e.g. by a surface free of bark and having a direction parallel to the length of the piece 920. Such a surface may be substantially planar as a result of splitting, in contrast to e.g. peeling an un-split log.

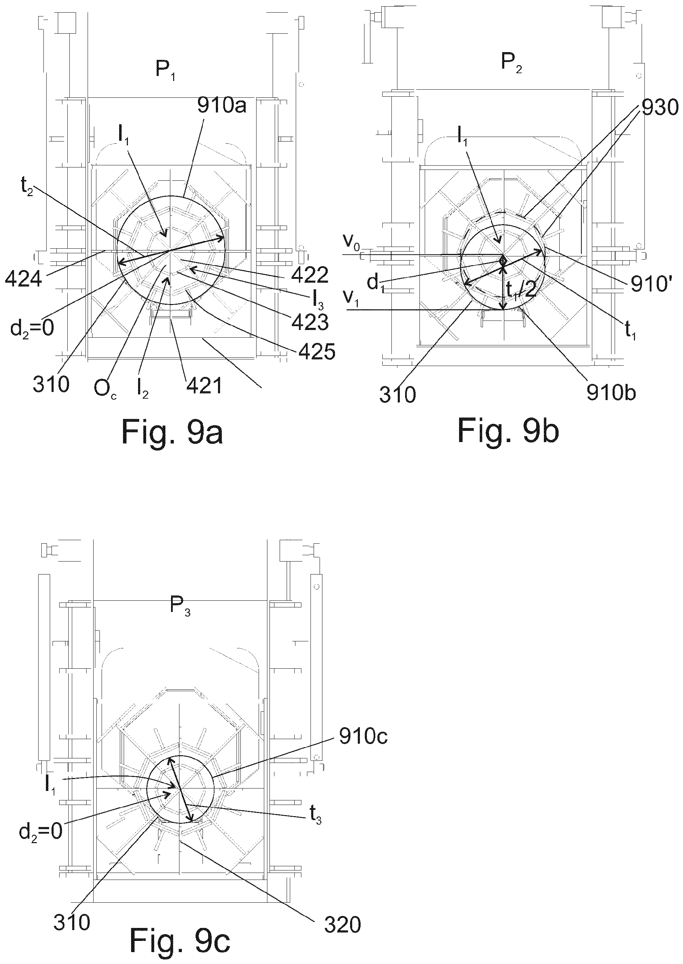

Referring to Figs 7a and 7b, as well as 9a and 9b, in an embodiment, the splitting wedge 320 is arranged to be in at least a first position P₁ and a second position P₂ with respect to the frame 110 of the firewood processor. Furthermore, as indicated in Fig. 9c, the splitting wedge 320 is arranged to be in also a third position P₃, wherein the positions P₁, P₂, and P₃ are different. The actuator 322 is configured to move the splitting wedge 320 in from the position P₁ to P₂ based on the thickness t₂ of the log that is split next, as discussed above. Moreover, the actuator 322 is configured to move the splitting wedge 320 from the position P₂ or P₁ to P₃ based on the thickness t₃ of the log that is split next, as discussed above. As is evident, the splitting wedge may be configured to be in freely selectable transverse (horizontal or vertical) position P. The actuator 322 may be configured to move the splitting wedge 320 to such a freely selectable transverse position. The number of such positions may be large; the three positions shown in Figs. 9a to 9c are examples.

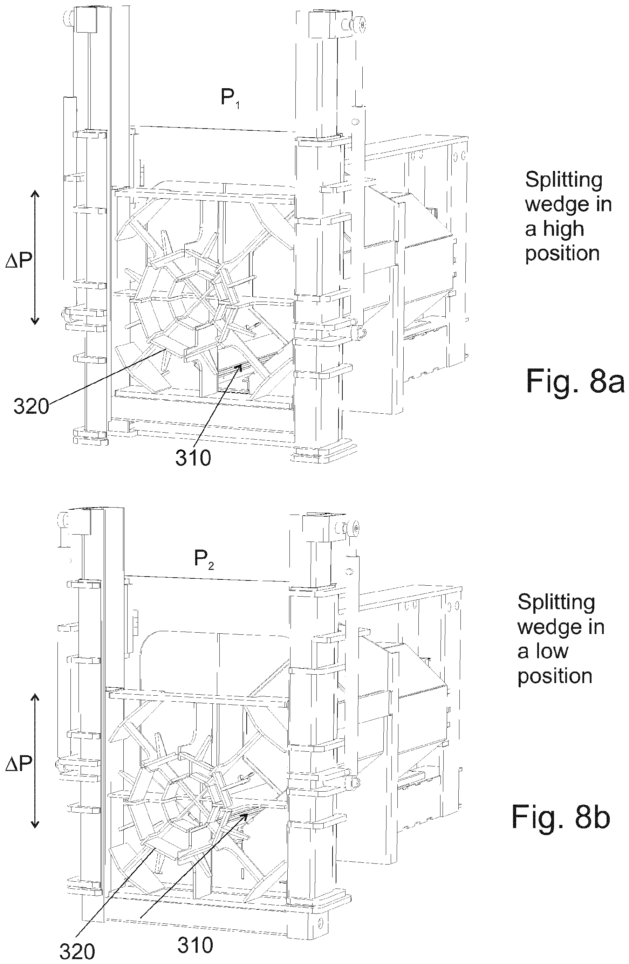

Preferably, the firewood processor 100 further comprises a sensor 350 (see Fig. 3d) configured to sense the thickness of a log 910 arranged in the splitting chute 310 and give a signal indicative of the thickness of the log 910 arranged in the splitting chute 310, which is the one that will be split next. In the alternative, the firewood processor may use the output of the sensor 530 (see Fig. 1c) to determine the thickness of the log 910 before the log enters the splitting chute. In an embodiment, the firewood processor 100 is configured to move the splitting wedge 320 to the first position P₁ and the second position P₂ using a signal indicative of the thickness of the log to be split (i.e. that is split next). Such a signal may be obtained from the sensor 350 or from the sensor 530. Such movement is indicated in Figs. 8a and 8b by the arrow ΔP.

As indicated in Figs. 8a, 8b, and 9a to 9c, preferably the splitting wedge is designed in such a way that the splitting wedge 320 has a height in a first direction transversal to the longitudinal direction Sx and a width height in a second direction transversal to the longitudinal direction and perpendicular to the first direction. Preferably, the splitting wedge has a height substantially equal to the width. The ratio of the height to the width may be e.g. from 2/3 to 3/2; or from 0.8 to 1.2. This has the effect of reducing the size of the splitting wedge 320 . Moreover, when the splitting wedge 320 is configured to move in the vertical direction, this has the effect of keeping the firewood processor 100 short (in the vertical direction), which increases the stability of the firewood process by reducing the risk of falling.

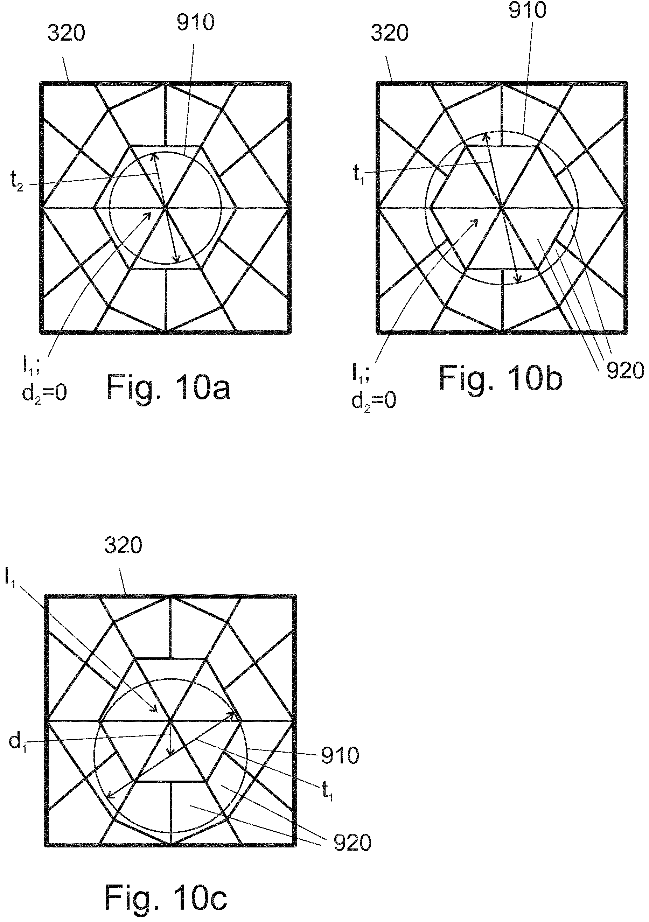

Referring to Figs. 7c a splitting wedge 320 typically comprises a first blade 421 and a second blade 422. Typically these blades are arranged to run in a same plane having a surface normal parallel to the longitudinal direction ±Sx (see Figs. 7a to 7c). However, a log 910 may also be split with two or more blades that are follow each other in the longitudinal direction ±Sx, as indicated in Fig. 7d, wherein the second blade 422 follows the first blade 421 in the direction -Sx. Such blades are typically used to split a log into multiple parts. Thus, in either case, the projections of the first blade 421 and the second blade 422 onto a plane having a surface normal parallel to the longitudinal direction Sx cross each other at a first intersection I₁. Moreover, such an intersection I₁ is not an intersection of a blade and the frame of the wedge 320. Thus these projections cross each other in such a way that at least three parts (421a, 421b, 422a, 422b) of the projections of the blades extend from the intersection I₁. As an alternative definition for the intersection, these projections may cross each other in such a way that at least four parts (421a, 421b, 422a, 422b) of the projections of the blades extend from the intersection I₁. As is evident, Figure 7c indicates such projections on such plane; and the different blades (421, 422, 423, 424, ...) may be arranged at different locations in the longitudinal direction Sx. Moreover, as indicated in Figs. 9a to 9c, in a preferred embodiment, four parts of the projections of the blades extend from some of the intersections. As indicated in Figs. 9a to 9c, in a preferred embodiment, three parts of the projections of the blades extend from some of the intersections. When the term intersection refers to a central intersection, typically the projections cross each other in such a way that at least six parts of the projections of the blades extend from the central intersection I₁ (see Figs. 9a to 9c and 10a to 10c). In a preferable embodiment, eight parts of the projections of the blades extend from the central intersection I₁ (see Figs. 9a to 9c).

Referring to Fig. 9b, in an embodiment, the control unit 155 is configured to move the splitting wedge 320, for at least a first thickness t₁ of a first log 910 that is split next, to such a location that a first distance d₁ is left between the first intersection I₁ and such a line that is parallel to the longitudinal direction ±Sx and comprises a central point of the log 910 that is split next (i.e. the log 910 to be split). The first distance d₁ may be e.g. at least 2 cm; preferably at least 4 cm. Such a log is arranged on the bottom of the splitting chute 310 in such a way that the length of the log 910 to be split is parallel to the longitudinal direction ±Sx. Referring to Fig. 9b, the distance d₁ may be e.g. equal to the value of vertical coordinate v₀ of the intersection I₁, when the vertical coordinate v1 of the bottom of the splitting chute 310 and half (ti/2) of the thickness t₁ of the log 910b to be split are subtracted therefrom. As indicated in the figure, the thickness of the (un-split) log 910b refers to its width. The thickness may refer to the diameter. Diameter, in general, refers to the maximum width of a log. Typically the logs 910 are roundish or round having a substantially constant diameter. The thickness may refer to the minimum width of the un-split log 910. The thickness may refer to the maximum width of the un-split log 910. In an embodiment, an irregular shape and the exact definition of thickness are taken into account in the algorithm used to control the position of the splitting wedge 320.

Moreover, referring to Fig. 9a, in an embodiment, the control unit 155 is configured to further move the splitting wedge 320, for at least a second thickness t₂ of a second log 910a to be split, to such a location that a second distance d₂ or no distance is left between the first intersection I₁ and such a line that is parallel to the longitudinal direction ±Sx and comprises a central point of the second log 910a to be split, wherein the second distance d₂ is different from the first distance d₁. The second distance d₂ may be e.g. less than 2 cm, such as less than 1 cm. As indicated in Fig. 9c, the distance may be substantially zero also for another thickness. As indicated therein, the log 910c is substantially thinner than the log 910 of Fig. 9a. However, in both cases it may be beneficial to have the central intersection I₁ arranged on the line that is parallel to the longitudinal direction ±Sx and comprises a central point of the log (910a, 910c). However, since the thickness is different, the vertical position of the splitting wedge 320 relative to the frame 110 of the firewood processor 100 is different in Fig. 9a than in Fig. 9c.

When the splitting wedge 320 comprises multiple blades an multiple intersections thereof, the intersections define multiple distances d remaining between each intersection and such a line that is parallel to the longitudinal direction ±Sx and comprises a central point of a first log 910 to be split. In such a case, the minimum of these distances d may be used in the optimization of splitting.

The distances d₁ and d₂ are examples. As is evident, in an embodiment, the distance d between the intersection I₁ of the blades, such as the central intersection, and the line parallel to the longitudinal direction of the log 910 and comprising the centre of the log 910 to be split may take multiple various value depending on the thickness t of the log. The distance d may be freely selectable, by moving the splitting wedge 320, based on the maximization of high-quality firewood. Or, in addition or alternative, based on the minimization of the number of pieces 920 of high-quality firewood obtainable by splitting with the splitting wedge on the condition that all pieces 920 as sufficiently small (see below). Or, in addition or alternative, based on the minimization of the amount of reject.

For example, for a log 910 having a thickness of at most 30 cm, the splitting wedge 320 can be moved to such a position that such a log is split to from two to eight pieces 920 having a minimum width of at least 5 cm and a maximum width of at most 15 cm. Moreover, for a log 910 having a thickness of more than 30 cm and at most 35 cm, the splitting wedge 320 can be moved to such a position that such a log is split to at least seven, and at most eleven or twelve pieces 920 having a minimum width of at least 5 cm and a maximum width of at most 15 cm.

Moreover, for a log 910 having a thickness of at most 10 cm, the splitting wedge 320 can be moved to such a position that such a log is split to only two pieces 920.

As indicated in Figs. 9a to 9c and 10a to 10c, in an embodiment, the intersection I₁ may refer to an intersection arranged at the centre of the splitting wedge. The intersection I₁ may be e.g. an intersection arranged (i) in the horizontal direction, at most 1/10 of the horizontal width of the splitting wedge away from the centre of the splitting wedge and (ii) in the vertical direction, at most 1/10 of the vertical height of the splitting wedge away from the centre of the splitting wedge.

In Fig. 9b, the reference 910b indicates the mutual position of the log 910b to be split and splitting wedge 320. As indicated, a distance d₁ is left in between the centre of the projection of the log 910' and the intersection I₁. For comparative reasons a log 910' having the same thickness is indicated in such a position that the centre of the projection of the log 910' coincides with the intersection I₁. Should the log 910' be split with such a splitting wedge 320 at such a location, a lot of reject would be produced, is indicated with the reference 930. Such reject 930 would have a minimum width of less than 5 cm. As indicated in the figure, when the splitting wedge 320 is moved by the distance d₁, the amount of reject is reduced. In certain cases the formation of reject 930 can be prevented. One possibility to maximize the amount of high-quality firewood is to minimize the number of pieces 920 into which a log 910 is split on the condition that the maximum width of the pieces 920 is at most 15 cm, such as from 10 cm to 15 cm or from 12 to 15 cm. By having the upper limit for the maximum width, one ensures that the pieces 920 or not too large for being high-quality firewood. Moreover, by minimizing the number of pieces 920, the average size of the pieces 920 is maximized. Reference is made to Figs. 10b and 10c showing two possibilities of splitting a log 910 into pieces 920 with the same splitting wedge 320. In the position corresponding to 910', some reject would be obtained from the surface of the log 910'. In contrast, in the position corresponding to 910b, no reject is obtained.

With reference to Fig. 9a the splitting wedge 320 preferably also comprises a splitting blade 423 that is tangential to another splitting blade, such as 421 or 422. A tangential splitting blade limits such a central opening O_{c} of the splitting wedge 320 that the central opening O_{c} does not comprise a boundary of the splitting wedge 320. With reference to Fig. 7b other blades may limit boundary openings O_{b} comprising a boundary of the splitting wedge 320. By using such tangential splitting blades, a thick log can be split into multiple sufficiently small pieces 920 of firewood. For example, the log 910 of Fig. 9a can be split into 32 pieces. In indicated in Fig. 9a a preferable splitting wedge 320 comprises a first tangential splitting blade 423 and a second tangential splitting blade 425. Moreover, in that embodiment, the first tangential splitting blade 423 is left in between the second tangential splitting blade 425 and the centre of the splitting wedge 320. In an embodiment, the distance of the second tangential splitting blade 425 from the centre of the splitting wedge 320 is greater than the distance the first tangential splitting blade 423 from the centre of the splitting wedge 320.

As shown in Fig. 9a, in a preferred embodiment, the splitting wedge 320 comprises a tangential splitting blade 423. Thus, in a preferred embodiment, the splitting wedge 320 comprises a first 421, a second, 422 and a third blade 423. The projections of the first blade 421 and the second blade 422 onto a plane having a surface normal parallel to the longitudinal direction ±Sx intersect at a first intersection I₁. The projection of the third blade 423 onto a plane having a surface normal parallel to the longitudinal direction ±Sx intersects (i) the projection of the first blade 421 at a second intersection I₂ and (ii) the projection of the second blade 422 at a third intersection I₃.

The intersections I₁, I₂ and I₃ are located a distance apart from each other. For example, the distance between any two of the three intersections (I₁ and I₂; or I₁ and I₃; or I₂ and I₃) may be at least 5 cm to ensure the pieces 920 are sufficiently large. Moreover, to enable splitting into sufficiently small pieces, the distance between any two of the aforementioned three intersections may be at most 15cm. The distance between any two of the aforementioned three intersections may be from 5 cm to 15 cm, such as from 7 cm to 12 cm. However, as indicated in Fig. 9a, a splitting wedge typically comprises multiple intersections, and the distance between some two of the intersections may be significantly higher. The aforementioned upper limit applies to neighboring intersections. For example, the tangential blade 425 of Fig. 9a forms other intersection further away from the central intersection I₁. However, the intermediate blade 423 is needed to split the log into sufficiently small pieces of firewood.

## Claims

1. A firewood processor (100), comprising
- a saw (210), arranged to cut and separate a log (910) from wood (900),
- means (500) for feeding wood (900) for the saw (210) in a longitudinal direction (+Sx),
- a splitting chute (310), arranged to receive at least a part of the log (910),
- a splitting wedge (320) arranged to split the log (910), of which at least part is arranged in the splitting chute (310), into pieces (920),
- a pressure plate (330) arranged to support the log (910) while splitting the log (910),
- means (340) for moving the pressure (330) plate and/or the splitting wedge (320) towards each other in such a way that the log (910) or another log arranged in between the pressure plate (330) and the splitting wedge (320) is configured to be split by said movement, and
- means (400) for moving the log (910) from the saw (210) onto the bottom of the splitting chute (310), wherein
- before cutting the log (910), the wood (900) is arranged to be moved in the positive longitudinal direction (+Sx) in such a way that an end (900a) of the wood (900) approaches an end stopper (220),
- the pressure plate (330) is configured to push the log (910) towards the splitting wedge (320) in a negative longitudinal direction (-Sx) that is reverse to the positive longitudinal direction (+Sx), and
- the means (400) for moving the log (910) from the saw (210) onto the bottom of the splitting chute (310) is configured to receive the log (310) from the saw (210) into a first position having a first height (h1),
**characterized by**
- the end stopper (220) being arranged at a distance (Lo, L₀+ΔL) from the saw (210) and configured to support an end (900a) of the wood (900) in such a way that the distance between the end stopper (220) and the saw (210) defines the length (L₀) of the cut log (910) and
- an end plane (222) having a surface normal to the longitudinal direction (±Sx), the end plane (220) configured to support an end of a log while moving the log to the splitting chute (310), wherein
- the firewood processor (100) is configured to adjust the position of the pressure plate (330) and the position of the end plane (222) based on the position of the end stopper (220), and (A)
- the end stopper (220) is integrated with the end plane (222) or (B)
- the end stopper (220) is configured to move also independently of the end plane (222).

2. The firewood processor (100) of claim 1, comprising
- an actuator (230) configured to move the end stopper (220) in the longitudinal direction (+Sx) in relation to the saw (210) and
- a controller (240) configured to engage the actuator (230) in response to a control signal (242).

3. The firewood processor (100) of claim 1 or 2, wherein
- before starting to cut and separate the log from wood, the distance between the end stopper (220) and the saw (210) has an initial value (L₀), and the firewood processor (100) is configured to automatically
- before separating the log (910) from the wood (900), to move the end stopper (220) such that the distance between the end stopper (220) and the saw (210) increases by a first tolerance (ΔL) and
- after separating the log (910) from the wood (900), to move the end stopper (220) such that the distance between the end stopper (220) and the saw (210) decreases to the initial value (L₀);
preferably
- the first tolerance (ΔL) is from 1 cm to 10 cm;
also preferably,
- the firewood processor (100) is configured to move the end stopper (220) automatically by the first tolerance (ΔL).

4. The firewood processor (100) of any of the claims 1 to 3, wherein
- before cutting the log (910), the wood (900) is arranged to be moved in the positive longitudinal direction (+Sx) in such a way that the end (900a) of the wood (900) makes a contact with the end stopper (220).

5. The firewood processor (100) of the claim 4, wherein
- the firewood processor (100) is configured to adjust the distance between the pressure plate (330) and the splitting wedge (320) based on the distance between the end stopper (220) and the saw (210) such that the distance between the pressure plate (330) and the splitting wedge (320) is at most 15 cm greater than the distance between the end stopper (220) and the saw (210).

6. The firewood processor (100) of the claim 5, comprising
- a sensor (332), such as a laser sensor, configured to sense the position of the pressure plate (330) and configured to give a signal indicative of the position of the pressure plate (330), wherein
- the firewood processor (100) is configured to adjust the position of the pressure plate (330) based on the position of the end stopper (220) and the signal indicative of the position of the pressure plate (330).

7. The firewood processor (100) of any of the claims 1 to 6, wherein
- the means (400) for moving the log (910) from the saw (210) to the splitting chute (310) is configured to support the log (910) from at least two such sides of the log (910) that
- a tangent plane of the first one of the at least two sides comprises a direction parallel to the length of the log (910) and
- a tangent plane of the second one of the at least two sides comprises a direction parallel to the length of the log (910);
preferably
- the firewood processor (100) further comprises another plane (430) configured to limit the movement of the other end of the log (910) while moving the log (910) to the splitting chute (310).

8. The firewood processor (100) of any of the claims 1 to 7, wherein
- the splitting chute (310) is configured to receive the log (910) from the means (400) for moving the log (910) from the saw (210) onto the bottom of the splitting chute (310) into a second position having a second height (h₂), wherein
- the second height (h₂) is greater than the first height (hi; h₂ > h₁).

9. The firewood processor (100) of any of the claims 1 to 8, wherein
- the means (400) for moving the log (910) from the saw (210) onto the bottom of the splitting chute (310) is configured to move the log (910) in a direction that forms an angle (α) with the vertical direction (±Sz);
preferably
- the angle (α) is at least 15 degrees;
more preferably
- the angle (α) is at least 15 degrees relative to the upwards vertical direction (+Sz);

## Patentansprüche

1. Brennholzmaschine (100), umfassend:
- eine Säge (210), die angeordnet ist, um ein Stammholz (910) zu schneiden und vom Holz (900) zu trennen;
- Mittel (500), um Holz (900) für die Säge (210) in einer Längsrichtung (+Sx) zuzuführen;
- eine Spaltrutsche (310), die zum Erhalten von mindestens einem Teil des Stammholzes (910) angeordnet ist;
- einen Spaltkeil (320), der angeordnet ist, das Stammholz (910), von dem mindestens ein Teil in der Spaltrutsche (310) angeordnet ist, in Stücke (920) zu spalten;
- eine Druckplatte (330), die angeordnet ist, um das Stammholz (910) beim Spalten des Stammholzes (910) zu unterstützen;
- Mittel (340), um die Druckplatte (330) und/oder den Spaltkeil (320) zueinander so zu bewegen, dass das Stammholz (910) oder ein anderes Stammholz, das zwischen der Druckplatte (330) und dem Spaltkeil (320) angeordnet ist, konfiguriert wird durch diese Bewegung gespalten zu werden; und
- Mittel (400), um das Stammholz (910) von der Säge (210) auf den unteren Teil der Spaltrutsche (310) zu bewegen, wobei:
- vor dem Schneiden des Stammholzes (910) das Holz (900) dazu angeordnet wird, in der positiven Längsrichtung (+Sx) so bewegt zu werden, dass ein Ende (900a) des Holzes (900) sich einem Endanschlag (220) nähert;
- die Druckplatte (330) konfiguriert ist, um das Stammholz (910) zum Spaltkeil (320) hin zu drücken, und zwar in einer negativen Längsrichtung (-Sx), die zu der positiven Längsrichtung (+Sx) entgegengesetzt ist; und
- die Mittel (400), um das Stammholz (910) von der Säge (210) auf den unteren Teil der Spaltrutsche (310) zu bewegen, dazu konfiguriert sind, das Stammholz (310) von der Säge (210) in einer ersten Position zu erhalten, die eine erste Höhe (h₁) aufweist;
**gekennzeichnet durch**
- den Endanschlag (220), der in einem Abstand (L₀, L₀+ΔL) von der Säge (210) (L₀) angeordnet ist und dazu konfiguriert ist, ein Ende (900a) des Holzes (900) so zu unterstützen, dass der Abstand zwischen dem Endanschlag (220) und der Säge (210) die Länge (L₀) des geschnittenen Stammholzes (910) definiert; und
- eine Endebene (222), die eine Fläche senkrecht zu der Längsrichtung (±Sx) aufweist, wobei die Endebene (222) dazu konfiguriert ist, beim Bewegen des Stammholzes zur Spaltrutsche (310) ein Ende eines Stammholzes zu unterstützen, wobei:
- die Brennholzmaschine (100) dazu konfiguriert ist, die Position der Druckplatte (330) und die Position der Endebene (222) auf Basis der Position des Endanschlags (220) einzustellen; und (A)
- der Endanschlag (220) in die Endebene (222) integriert ist oder (B)
- der Endanschlag (220) dazu konfiguriert ist, sich auch unabhängig von der Endebene (222) zu bewegen.

2. Brennholzmaschine (100) nach Anspruch 1, umfassend:
- ein Stellglied (230), das konfiguriert ist, um den Endanschlag (220) in der Längsrichtung (+Sx) in Bezug auf die Säge (210) zu bewegen; und
- eine Steuerung (240), die dazu konfiguriert ist, das Stellglied (230) als Reaktion auf ein Steuersignal (242) einzuschalten.

3. Brennholzmaschine (100) nach Anspruch 1 oder 2, wobei
- bevor damit begonnen wird, das Stammholz zu schneiden und vom Holz zu trennen, der Abstand zwischen dem Endanschlag (220) und der Säge (210) einen Anfangswert (L₀) aufweist und die Brennholzmaschine (100) automatisch konfiguriert wird,
- um vor dem Trennen des Stammholzes (910) vom Holz (900) den Endanschlag (220) so zu verschieben, dass der Abstand zwischen dem Endanschlag (220) und der Säge (210) sich um eine erste Maßtoleranz (ΔL) erhöht; und
- um nach dem Trennen des Stammholzes (910) vom Holz (900) der Endanschlag (220) so verschoben wird, dass der Abstand zwischen dem Endanschlag (220) und der Säge (210) sich auf den Anfangswert (L₀) verringert;
bevorzugt
- die erste Maßtoleranz (ΔL) im Bereich von 1 cm bis 10 cm liegt;
auch bevorzugt
- die Brennholzmaschine (100) dazu konfiguriert ist, den Endanschlag (220) automatisch um die erste Maßtoleranz (ΔL) zu verschieben.

4. Brennholzmaschine (100) nach einem der Ansprüche 1 bis 3, wobei
- vor dem Schneiden des Stammholzes (910) das Holz (900) dazu angeordnet ist, in der positiven Längsrichtung (+Sx) so bewegt zu werden, dass das Ende (900a) des Holzes (900) mit dem Endanschlag (220) in Kontakt kommt.

5. Brennholzmaschine (100) nach Anspruch 4, wobei
- die Brennholzmaschine (100) dazu konfiguriert ist, den Abstand zwischen der Druckplatte (330) und dem Spaltkeil (320) auf Basis des Abstandes zwischen dem Endanschlag (220) und der Säge (210) so einzustellen, dass der Abstand zwischen der Druckplatte (330) und dem Spaltkeil (320) höchstens 15 cm größer ist als der Abstand zwischen dem Endanschlag (220) und der Säge (210).

6. Brennholzmaschine (100) nach Anspruch 5, umfassend:
- einen Sensor (332), wie z. B. einen Lasersensor, der dazu konfiguriert ist, die Position der Druckplatte (330) zu erfassen sowie ein Signal zu geben, das für die Position der Druckplatte (330) bezeichnend ist, wobei
- die Brennholzmaschine (100) dazu konfiguriert ist, die Position der Druckplatte (330) auf Basis der Position des Endanschlags (220) und des Signals, das für die Position der Druckplatte (330) bezeichnend ist, einzustellen.

7. Brennholzmaschine (100) nach einem der Ansprüche 1 bis 6, wobei
- die Mittel (400) zum Bewegen des Stammholzes (910) von der Säge (210) zur Spaltrutsche (310) dazu konfiguriert sind, das Stammholz (910) von mindestens zwei Seiten des Stammholzes (910) aus so zu unterstützen, dass
- eine Tangentenebene der ersten der mindestens zwei Seiten eine Richtung parallel zur Länge des Stammholzes (910) umfasst und
- eine Tangentenebene der zweiten der mindestens zwei Seiten eine Richtung parallel zur Länge des Stammholzes (910) umfasst;
bevorzugt
- die Brennholzmaschine (100) außerdem eine weitere Ebene (430) umfasst, die dazu konfiguriert ist, die Bewegung des anderen Endes des Stammholzes (910), während das Stammholz (910) zur Spaltrutsche (310) bewegt wird, zu begrenzen.

8. Brennholzmaschine (100) nach einem der Ansprüche 1 bis 7, wobei
- die Spaltrutsche (310) dazu konfiguriert ist, das Stammholz (910) von den Mitteln (400) zu erhalten, die dazu dienen, das Stammholz (910) von der Säge (210) auf den unteren Teil der Spaltrutsche (310) in eine zweite Position, die eine zweite Höhe (h₂) aufweist, zu bewegen; wobei
- die zweite Höhe (h₂) größer ist als die erste Höhe (h₁; h₂ > h₁).

9. Brennholzmaschine (100) nach einem der Ansprüche 1 bis 8, wobei
- die Mittel (400), um das Stammholz (910) von der Säge (210) auf den unteren Teil der Spaltrutsche (310) zu bewegen, dazu konfiguriert sind, das Stammholz (910) in einer Richtung, die einen Winkel (α) mit der Vertikalrichtung (±Sz) bildet, zu bewegen;
bevorzugt
- der Winkel (α) mindestens 15 Grad beträgt;
besonders bevorzugt
- der Winkel (α) in Bezug auf die Aufwärtsvertikalrichtung (+Sz) mindestens 15 Grad beträgt.

## Revendications

1. Tronçonneuse-fendeuse pour bois de chauffage (100), comprenant :
- une scie (210), conçue afin de couper et de séparer une bûche (910) de bois (900),
- des moyens (500) permettant d'amener du bois (900) pour la scie (210) dans une direction longitudinale (+Sx),
- une goulotte de fendage (310), conçue afin de recevoir au moins une partie de la bûche (910),
- un coin de fendage (320), conçu afin de fendre la bûche (910), dont au moins une partie est agencée dans la goulotte de fendage (310), en morceaux (920),
- une plaque de pression (330) conçue afin de supporter la bûche (910) pendant le fendage de ladite bûche (910),
- des moyens (340) permettant de déplacer la plaque de pression (330) et/ou le coin de fendage (320) l'un vers l'autre de sorte que la bûche (910) ou une autre bûche disposée entre la plaque de pression (330) et le coin de fendage (320) soit configurée afin d'être fendue par ledit mouvement, et
- des moyens (400) permettant de déplacer la bûche (910) de la scie (210) sur le fond de la goulotte de fendage (310), dans laquelle
- avant de couper la bûche (910), le bois (900) est disposé de façon à être déplacé dans la direction longitudinale positive (+Sx) de sorte qu'une extrémité (900a) du bois (900) approche d'une butée d'extrémité (220),
- la plaque de pression (330) est configurée afin de pousser la bûche (910) vers le coin de fendage (320) dans une direction longitudinale négative (-Sx) qui est inverse à la direction longitudinale positive (+Sx), et
- les moyens (400) permettant de déplacer la bûche (910) de la scie (210) sur le fond de la goulotte de fendage (310) sont configurés afin de recevoir la bûche (310) de la scie (210) dans une première position présentant une première hauteur (h₁),
**caractérisée en ce que**
- la butée d'extrémité (220) est agencée à une distance (Lo, L₀ + ΔL) de la scie (210) et configurée afin de supporter une extrémité (900a) du bois (900) de telle sorte que la distance entre la butée d'extrémité (220) et la scie (210) définisse la longueur (L₀) de la bûche coupée (910), et
- un plan d'extrémité (222) présentant une surface perpendiculaire à la direction longitudinale (±Sx), le plan d'extrémité (222) étant configuré afin de supporter une extrémité d'une bûche tout en déplaçant la bûche vers la goulotte de fendage (310), dans laquelle
- la tronçonneuse-fendeuse pour bois de chauffage (100) est configurée afin d'ajuster la position de la plaque de pression (330) et la position du plan d'extrémité (222) sur la base de la position de la butée d'extrémité (220), et (A)
- la butée d'extrémité (220) est intégrée avec le plan d'extrémité (222), ou (B)
- la butée d'extrémité (220) est configurée afin de se déplacer également de manière indépendante du plan d'extrémité (222).

2. Tronçonneuse-fendeuse (100) selon la revendication 1, comprenant
- un actionneur (230) configuré afin de déplacer la butée d'extrémité (220) dans la direction longitudinale (+Sx) relativement à la scie (210), et
- un système de commande (240) configuré afin de mettre en prise l'actionneur (230) en réponse à un signal de commande (242).

3. Tronçonneuse-fendeuse (100) selon la revendication 1 ou 2, dans laquelle
- avant de commencer à couper et à séparer la bûche du bois, la distance entre la butée d'extrémité (220) et la scie (210) présente une valeur initiale (L₀) et la tronçonneuse-fendeuse (100) est configurée afin de, automatiquement,
- avant de séparer la bûche (910) du bois (900), déplacer la butée d'extrémité (220) de sorte que la distance entre la butée d'extrémité (220) et la scie (210) augmente d'une première tolérance (ΔL), et
- après la séparation de la bûche (910) du bois (900), déplacer la butée d'extrémité (220) de sorte que la distance entre la butée d'extrémité (220) et la scie (210) diminue à la valeur initiale (L₀) ;
de préférence
- la première tolérance (ΔL) est comprise entre 1 cm et 10 cm ; également de préférence,
- la tronçonneuse-fendeuse (100) est configurée afin de déplacer la butée d'extrémité (200) automatiquement de la première tolérance (ΔL).

4. Tronçonneuse-fendeuse (100) selon l'une quelconque des revendications 1 à 3, dans laquelle
- avant de couper la bûche (910), le bois (900) est disposé de façon à être déplacé dans la direction longitudinale positive (+Sx) de sorte que l'extrémité (900a) du bois (900) fasse contact avec la butée d'extrémité (220).

5. Tronçonneuse-fendeuse (100) selon la revendication 4, dans laquelle
- la tronçonneuse-fendeuse (100) est configurée afin d'ajuster la distance entre la plaque de pression (330) et le coin de fendage (320) sur la base de la distance entre la butée d'extrémité (220) et la scie (210) de sorte que la distance entre la plaque de pression (330) et le coin de fendage (320) soit au plus de 15 cm supérieure à la distance entre la butée d'extrémité (220) et la scie (210).

6. Tronçonneuse-fendeuse (100) selon la revendication 5, comprenant
- un capteur (332), comme un capteur laser, configuré afin de détecter la position de la plaque de pression (330) et configuré afin de donner un signal indicatif de la position de la plaque de pression (330), dans laquelle
- la tronçonneuse-fendeuse (100) est configurée afin d'ajuster la position de la plaque de pression (330) sur la base de la position de la butée d'extrémité (220) et du signal indicatif de la position de la plaque de pression (330).

7. Tronçonneuse-fendeuse (100) selon l'une quelconque des revendications 1 à 6, dans laquelle
- les moyens (400) permettant de déplacer la bûche (910) de la scie (210) vers la goulotte de fendage (310) sont configurés afin de supporter la bûche (910) depuis au moins deux côtés de la bûche (910) de sorte que
- un plan tangent du premier des au moins deux côtés comprenne une direction parallèle à la longueur de la bûche (910), et
- un plan tangent du second des au moins deux côtés comprenne une direction parallèle à la longueur de la bûche (910) ;
de préférence
- la tronçonneuse-fendeuse (100) comprend en outre un autre plan (430) configuré afin de limiter le mouvement de l'autre extrémité de la bûche (910) tout en déplaçant la bûche (910) vers la goulotte de fendage (310).

8. Tronçonneuse-fendeuse (100) selon l'une quelconque des revendications 1 à 7, dans laquelle
- la goulotte de fendage (310) est configurée afin de recevoir la bûche (910) depuis les moyens (400) permettant de déplacer la bûche (910) de la scie (210) sur le fond de la goulotte de fendage (310) dans une seconde position présentant une seconde hauteur (h₂), dans laquelle
- la seconde hauteur (h₂) est supérieure à la première hauteur (h₁ ; h₂ > h₁).

9. Tronçonneuse-fendeuse (100) selon l'une quelconque des revendications 1 à 8, dans laquelle
- les moyens (400) permettant de déplacer la bûche (910) de la scie (210) sur le fond de la goulotte de fendage (310) sont configurés afin de déplacer la bûche (910) dans une direction qui forme un angle (α) avec la direction verticale (±Sz) ;
de préférence
- l'angle (α) est d'au moins 15 degrés ;
de manière davantage préférée
- l'angle (α) est d'au moins 15 degrés relativement à la direction verticale vers le haut (+ Sz).
